# EUROPÄISCHE PATENTSCHRIFT

(11) **EP 3 707 995 B1**
(45) Veröffentlichungstag und Bekanntmachung des Hinweises auf die Patenterteilung: **04.09.2024**
(21) Anmeldenummer: 20162760.1
(22) Anmeldetag: 12.03.2020
(51) Int. Cl.: A01J 9/04

(54) **MILCHTANK**
MILK RESERVOIR
RÉSERVOIR À LAIT

(30) Priorität: 14.03.2019 DE 202019101469 U
(43) Veröffentlichungstag der Anmeldung: 16.09.2020
(73) Patentinhaber: Japy Tech, 21850 Saint-Apollinaire (FR)
(72) Erfinder: DELOR, Olivier, 21640 Vougeot (FR); GAUDOT, Eric, 21000 Dijon (FR); CHEVANNE, Jacques, 21000 Dijon (FR)
(74) Vertreter: Gauche, Raynald André

(56) Entgegenhaltungen:
- EP-A1- 3 572 778
- BE-A- 672 572
- DE-A1- 3 242 346
- FR-B1- 2 933 080

## Beschreibung

Die vorliegende Erfindung betrifft einen Milchtank, vorzugsweise einen Milchkühltank mit einer Rührvorrichtung.

Bei Milchtanks, insbesondere vertikalen Milchtank, werden meist lange Rührstäbe eingesetzt, um auch kleine Milchmengen im unteren Bereich des Milchtanks zu homogenisieren und die Gefahr eines Gefrierens von Milch relativ gering zu halten. Diese Rührer müssen bodennah geführt werden.

Die FR 2933080 B1 offenbart eine Führung eines Rührers in Form einer Kugel. So kann u.a. eine Führung aus mehreren Stäben in Kombination mit dieser Kugel vorgesehen sein, oder aber eine Führung durch einen zylindrischen Ring. Weiterhin ist es möglich, dass die Positionen beider Führungselemente vertauscht sind. Nachteilig an dieser Konstruktion ist die Flucht bzw. Ausrichtung des Rührstabes, welcher am oberen Teil des Tanks befestigt ist, mit der Achse des zylindrischen Rings welcher am unteren Teil des Tanks befestigt ist oder der Achse der Kreisbahn, welche durch die Stäbe definiert wird, die am unteren Teil des Tanks befestigt sind. Jeder Versatz erzeugt Kontaktkräfte zwischen der Kugel und dem Ring oder den Stäben, was zu einer Erwärmung der Milch und zu einer Gefahr einer Butterung der Milch führt, was die Qualität der Milch verschlechtert.

Die BE 672 572 A offenbart einen Tauchrührer für eine Milchkanne, mittels welchem eine Rührung von gekühlter Milch erfolgen kann. Das Rührblatt des Tauchrührers wird dabei von einer Hülse gehalten, welche unten geöffnet ist und streben zur Stabilisierung der Rührerbewegung aufweist.

Die DE 32 42 346 A1 offenbart eine Rührvorrichtung aus der Papierindustrie

Ausgehend vom vorgenannten Stand der Technik ist es die Aufgabe der vorliegenden Erfindung einen Milchtank zu schaffen, welcher mit größeren Fertigungstoleranzen und dadurch kosteneffizient, zeiteffizient herstellbar ist und welcher eine hohe Milchqualität bei der Verarbeitung garantiert.

Die vorliegende Erfindung löst diese Aufgabe durch das Bereitstellen eines Milchtanks mit den Merkmalen des Anspruchs 1 und/oder 9.

Ein erfindungsgemäßer Milchtank weist einen Hohlraum als Reservoir zur Lagerung und/oder Kühlung von Milch auf. Bevorzugt dient das Reservoir dabei sowohl für die Lagerung als auch für die Kühlung von Milch.

Der Tank weist eine Rührvorrichtung mit einem Rührstab, auch Rührwelle genannt, auf, welcher in dem Hohlraum angeordnet ist. Die Rührvorrichtung kann zudem eine Antriebseinheit und eine Antriebswelle aufweisen. Der Rührstab kann an einem oberen Ende mit der Antriebswelle verbunden sein. Der Rührstab weist zudem vorzugsweise in seinem unteren Drittel Rührblätter zur Homogenisierung der Milch auf, welche radial hervorstehen. Bevorzugt können zwei oder drei Rührblätter auf einer oder mehreren Ebenen vorgesehen sein.

Der Rührstab weist, vorzugsweise endständig, ein erstes Führungsmittel auf. Der Boden des Tanks weist ein zweites Führungsmittel auf. Die Führungsmittel wechselwirken miteinander.

Eines der beiden vorgenannten Führungsmittel ist als eine Ausnehmung ausgebildet. Eine Ausnehmung nach dem Verständnis der vorliegenden Erfindung weist vorzugsweise eine napfförmige Ausgestaltung auf, wobei die Mantelflächen dieser Ausgestaltung als Anschlagflächen für das andere Führungsmittel vorgesehen ist. Im Fall, dass der Rührstab als Hohlstab ausgebildet ist, kann sich die Ausnehmung auch über die gesamte Länge des Rührstabes erstrecken. Aus hygienischen Gründen ist es allerdings bevorzugt, wenn die Ausnehmung einen Boden aufweist. Die Ausnehmung kann dabei eine bevorzugte Tiefe von weniger als 20 cm, vorzugsweise weniger als 10 cm, aufweisen.

Das andere der beiden vorgenannten Führungsmittel ist als ein Führungszapfen ausgebildet. Dieser ragt zumindest bereichsweise in die Ausnehmung hinein, so dass Ausnehmung als Anschlag für den Zapfen dient, sofern der Rührstab sich radial zu seiner Drehachse bewegt.

Der Führungszapfen weist einen Kopf mit einer Kontaktfläche mit der Ausnehmung auf. Diese Kontaktfläche ist die Fläche, welche zum Anschlag mit der Ausnehmung bei radialer Auslenkung des Rührstabes gebracht wird.

Der Kopf des Führungszapfens ist erfindungsgemäß als ein Torus und/oder ein Doppelkonus ausgebildet. Im Fall des Doppelkonus wird dieser aus zwei aufeinander zulaufende und zudem konisch-auslaufenden Flächen gebildet. Die beiden konisch-auslaufenden Flächen weisen eine gemeinsame Grundfläche auf, welche die Kontaktzone bildet. Umfangsseitig um die Grundfläche ist ein imaginärer oder realer Kreuzungsbereich der beiden Flächen angeordnet.

Die Kontaktfläche des Führungszapfens, welche im Fall einer radialen Bewegung des Rührstabes an die Ausnehmung anschlägt, ist dabei erfindungsgemäß dem Torus oder dem Kontaktbereich der beiden Flächen zugeordnet.

Im Fall des Torus können in einer vorteilhaften Ausführungsvariante oberhalb und unterhalb des Torus ebenfalls zwei aufeinander zulaufende, konisch-auslaufende Flächen vorgesehen sein.

Weitere vorteilhafte Ausgestaltungen der Erfindung sind Gegenstand der Unteransprüche.

Es sind im Rahmen der vorliegenden Erfindung verschiedene Varianten von Ausnehmungen realisierbar, z.B. eine Ausnehmung mit hexagonalem Querschnitt. Die Ausnehmung kann allerdings vorzugsweise als zylindrische Ausnehmung ausgebildet sein.

Um ein Abfließen der Milch oder eines Reinigungsmediums aus der Ausnehmung zu erleichtern, ist es von Vorteil, wenn der Führungszapfen zu am Boden des Milchtanks festgelegt ist. Dies heißt zugleich, dass die Position der Ausnehmung am Rührstab ist. Durch die zum Führungszapfen hin gerichtete Öffnung der Ausnehmung kann ein Abfließen aufgrund der Schwerkraft einfach und unkompliziert erfolgen.

Bevorzugt liegt ein Spiel zwischen dem Führungszapfen und der zylindrischen Ausnehmung vor. Der der Minimalabstand zwischen dem Führungszapfen und der Ausnehmung bei zentrischer Positionierung des Führungszapfens in der Ausnehmung, also das Spiel, beträgt bevorzugt zumindest 0,1 mm, vorzugsweise zwischen 0,2 bis 1,8 mm.

Parallel oder schräg zur Längsachse B des Führungszapfens können zudem bevorzugt Unterbrechungen in der Kontaktfläche des Führungszapfens, vorzugsweise Rillen, vorgesehen sind. Dadurch kann ein Abfließen der Milch oder des Reinigungsmediums zusätzlich unterstützt werden.

Der Führungszapfen kann ausgehend von der Kontaktfläche eine konische Fläche aufweisen, welche zum Boden der Ausnehmung hin spitz zuläuft.

Der Führungszapfen kann über mechanische Verbindungsmittel, vorzugsweise über ein einziges Verbindungsmittel, besonders bevorzugt durch Verschraubung, festgelegt sein.

Weiterhin erfindungsgemäß ist ein Milchtank mit einem Hohlraum zur Lagerung und Kühlung von Milch, wobei der Tank ein Rührvorrichtung mit einem Rührstab aufweist, welcher in dem Hohlraum angeordnet ist.

Die Rührvorrichtung weist erfindungsgemäß eine Antriebseinheit mit einer Antriebswelle auf, welche über ein mechanisches Gelenk mit dem Rührstab verbunden ist. Das mechanische Gelenk ermöglicht eine lotrechte Auslenkung des Rührstabes, so dass eine geringfügige montagebedingte Fehlausrichtung des Rührstabes ausgeglichen werden kann und Fertigungstoleranzen erhöht werden können. Weiterhin sind die Kräfte zwischen der Kontaktzone und der Ausnehmung praktisch Null, was zu keiner Erwärmung der Milch oder zu einer Gefahr der Butterung führt und eine hohe Milchqualität garantiert.

Dabei ist es von Vorteil, wenn das mechanische Gelenk als Kardan-Gelenk oder alternativ als Kugelkopf-Gelenk ausgebildet ist.

Der Rührstab kann belastungsarm im Tank über das mechanische Gelenk hängend an einem ersten Ende aufgehängt sein, wobei der Rührstab über die Führungsmittel an einem zweiten Ende geführt ist.

Der Milchtank kann insbesondere und bevorzugt als vertikaler Milchtank ausgebildet sein, allerdings kann der Milchtank im Rahmen der vorliegenden Erfindung auch horizontal ausgebildet sein. Bevorzugt kann der Milchtank eine Längsachse A aufweisen, wobei der Rührstab parallel zur Längsachse A angeordnet ist.

Ebenfalls bevorzugt kann der Rührstab eine Länge von mehr als 2 Metern aufweist.

Bevorzugt verläuft die Bodenfläche des Milchtanks, an welcher der Führungszapfen angeordnet ist, gegenüber der Längsachse des Milchtanks schräg. Schräg bedeutet bekanntermaßen nicht parallel zur Längsachse und auch nicht senkrecht zur Längsachse des Milchtanks.

Weitere Vorteile, Merkmale und Einzelheiten der Erfindung ergeben sich aus der nachfolgenden Beschreibung, in der mehrere Ausführungsbeispiele der Erfindung anhand der beiliegenden Zeichnungen näher erläutert werden. Der Fachmann wird die in den Zeichnungen, der Beschreibung und den Ansprüchen in Kombination offenbarten Merkmale zweckmäßigerweise auch einzeln betrachten und zu sinnvollen weiteren Kombinationen zusammenfassen. Es zeigen:
- Fig. 1: schematische Darstellung eines erfindungsgemäßen Milchtanks
- Fig. 2: Detailansicht einer ersten Ausführungsvariante eines Führungszapfens in einem erfindungsgemäßen Milchtank
- Fig. 3: Detailansicht des Führungszapfens in einer Draufsicht in einen erfindungsgemäßen Milchtank; und
- Fig. 4: Detailansicht einer dritten Ausführungsvariante eines Führungszapfens in einem erfindungsgemäßen Milchtank.

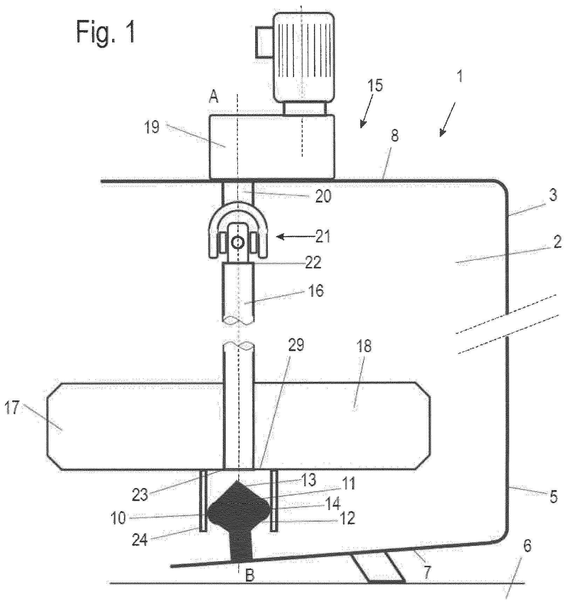

In Fig. 1 ist schematisch ein Milchtank 1 einer Anordnung zum Lagern von Milch dargestellt.

Dieser Milchtank 1 ist Teil einer Anordnung zur Milchkühlung und ist insbesondere als Milchkühltank ausgebildet, weiterhin weist die Anordnung einen Kühlkreislauf auf, welcher nach dem Prinzip einer Kompressionskältemaschine arbeitet, und optional eine externe Steueranlage zur Steuerung und/oder Überwachung der Betriebszustände des Milchtanks. Als Betriebszustände sind z.B. der Leerzustand als "Stand-by", die Entleerung z.B. in einen Tankwagen oder die Befüllung, welche typischerweise allmählich erfolgt, zu verstehen. Der Milchtank 1 weist einen Hohlraum 2 zur Aufnahme und Kühlung von Milch auf, welcher durch eine Tankwand 3 begrenzt wird.

Die Tankwand 3 weist eine Wandpartie oder mehrere Wandpartien auf, welche in Kontakt mit einem Kühlmittel stehen und welche sowohl im Bereich eines Bodens 7 als auch im unteren Bereich des Hohlraums 5 des Milchtanks zum Kühlen der Milch angeordnet sind und welche Teil zumindest eines Verdampfers oder mehrerer Verdampfer des vorgenannten Kühlkreislaufs ist oder sind. Der Kühlkreislauf kann zusätzlich zu dem Verdampfer oder den Verdampfern zumindest einen Kompressor, ein Regelorgan und einen Kondensator aufweisen.

Wie aus Fig. 1 erkennbar, handelt es sich bei dem Milchtank bevorzugt um einen vertikalen Milchtank. Der vertikale Milchtank 1 weist eine Zylindermantelfläche 5 auf, welche eine Längsachse A des Milchtanks 1 definiert und Teil der Tankwand 3 ist. Alternativ sind auch andere Mantelflächen, z.B. um eine Mantelfläche eines Prismas mit vier, sechs, acht oder mehr Kanten, handeln

Diese Längsachse steht im Wesentlichen senkrecht zum Untergrund 6, auf welchem der vertikale Milchtank 1 aufgestellt und/oder montiert ist. Dabei kann der Milchtank 1 über nicht-näher dargestellte Stützfüße verfügen und/oder in einer weiteren Ausführungsweise über einen Stützring verfügen.

Der Milchtank 1 weist endständig an der Zylindermantelfläche 5 zum Untergrund 6 hin einen Boden 7 und in entgegengesetzter Richtung einen Endabschnitt 8 zum endseitigen Verschluss des Milchtanks 1 auf.

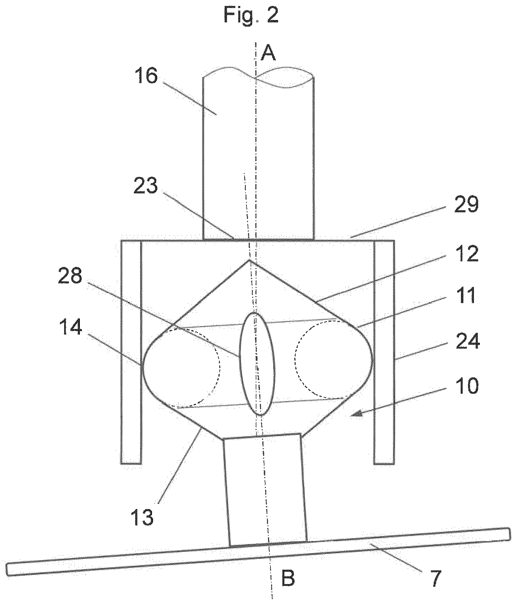

Der Boden 7 weist eine zur Längsachse A des Milchtanks schräge Fläche in Kontakt mit einem Kühlmittel auf. Von der Bodenfläche 7 ragt ein Führungszapfen 10 in den Hohlraum 2 hinein. Dieser Führungszapfen 10 ist in Fig. 2 im Detail dargestellt. Er weist eine Längsachse B und einen Lagerkopf 11 mit zwei aufeinander zulaufende Flächen 12 und 13 auf, deren Radius sich bei Annäherung der Flächen jeweils zunehmend erweitert, sie laufen konisch aus.

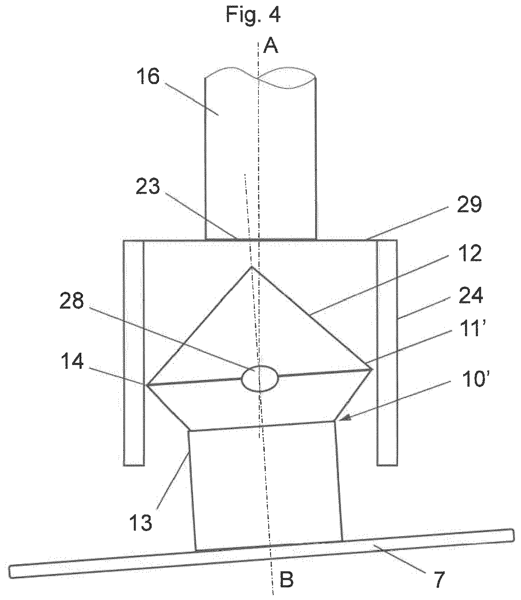

Im Übergangsbereich dieser beiden Flächen 12 und 13 weist der Führungszapfen 10 eine radiale Kontaktfläche 14 auf, welche als Torus ausgeformt ist. Dies ist in Fig. 2 dargestellt. Alternativ können die beiden aufeinander zulaufende, konisch-auslaufende Flächen 12 und 13 auch eine doppelkonische Form des Kopfes 11' ausbilden. Dies ist einer Ausführungsvariante eines Führungszapfens 10' in Fig. 4 in Abwandlung zu Fig. 2 dargestellt. Konisch-auslaufend bedeutet dabei, dass sich der Radius der Fläche zunehmend erweitert. Aufeinander zulaufend bedeutet hingegen, dass sich die Flächen 12 und 13 in ihrem axialen Verlauf aneinander annähern.

Der Führungszapfen 10 dient der Führung einer Rührvorrichtung 15. Diese Rührvorrichtung 15 weist einen Rührstab 16 auf und radial vom Rührstab hervorstehende Rührblätter 17 und 18. In Fig. 1 sind lediglich zwei Rührblätter 17 und 18 dargestellt, es ist allerdings auch möglich, dass 3 oder mehr Rührblätter vorgesehen sein können.

Der Rührstab 16 des vertikalen Milchtanks 1 kann mehrere Meter lang sein. Schwingungen des Rührstabs sind somit im Betrieb möglich. Der Führungszapfen 10 'ermöglicht es, diese Schwingungen auszugleichen.

Weiterer Bestandteil der Rührvorrichtung 15 ist eine Antriebseinheit 19, welche den Rührstab in Rotation versetzt. Dabei kann es sich insbesondere um einen Motor oder einen Getriebemotor handeln, welcher vorzugsweise an der Außenseite des Milchtanks 1 am Endabschnitt 8 festgelegt ist. Die Verbindung der Antriebseinheit 19 mit dem Rührstab 16 erfolgt dabei durch eine Antriebswelle 20.

Der Versatz zwischen der Achse A des Rührstabs 16 und der Längsachse B des Führungszapfens 10 erzeugt Verschleißkräfte zwischen der Kontaktzone dem Führungszapfen 10 und der Aufnahme 24. Um diese Kräfte zu beseitigen ist zwischen der Antriebswelle 20 und dem Rührstab 16 ein mechanisches Gelenk 21 angeordnet.

Das Gelenk 21 kann bevorzugt als Kardangelenk und/oder als Kugelkopfgelenk oder als eine elastische, insbesondere drehelastische, Kupplung ausgebildet sein. Fig. 1 zeigt die Variante eines Kardangelenks, auch Kreuzgelenk genannt. Es weist ein Zwischenstück 22 auf, welches um zwei Achsen rotierbar ist, so dass es möglich wird, dass sich der Beugungswinkel zwischen dem Rührstab 16 und der Antriebswelle 20 im Betrieb der Rührvorrichtung geringfügig verändern kann um Krafteinflüssen, z.B. durch Fehlausrichtung bei Montage der Rührvorrichtung 15, insbesondere des Rührstabs 16, zu mindern.

Im Fall eines Kugelkopfgelenks besitzt wahlweise einer der beiden Verbindungspartner, also die Antriebswelle 20 oder der Rührstab 16 an einem ersten Ende 22 einen Kugelkopf und der andere Verbindungspartner eine kalottenförmige Aufnahme, welche den Kugelkopf bereichsweise umgreifen kann.

Der Führungszapfen 10 dient der endständigen Führung des Rührstabs 16 am seinem zur Antriebswelle 20 entgegengesetzten zweiten Ende 23. Hierfür weist der Rührstab 16 an dem zweiten Ende 23 eine zylindrische Ausnehmung 24 auf. Zylindrisch ist dabei insbesondere die Mantelfläche der Ausnehmung 24, Die Ausnehmung 24 ist bevorzugt zumindest einseitig zum Boden 7 des Milchtanks 1 hin offen ausgebildet. Der Boden der Ausnehmung 24 braucht hingegen nicht zwingend eben sondern kann variabel ausgebildet sein.

Der Führungszapfen 10 dient der Führung der zylindrischen Ausnehmung 24, in welche der Kopf 11 des Führungszapfens 10 zumindest bereichsweise und mit Spiel zur Bewegung innerhalb der Ausnehmung 24 hineinragt. Hierfür ist die Ausnehmung 24 nach unten, also zum Boden 7 hin, offen. Das Spiel, also der Mindestabstand zwischen der Ausnehmung 24 und dem Führungszapfen 10, kann vorzugsweise zumindest 0,1 mm, besonders bevorzugt zwischen 0,2 bis 1,8 mm, betragen.

Die Ausnehmung 24 sitzt dabei nicht unmittelbar auf dem Führungszapfen 10 auf, sondern der Rührstab 16 ist hängend an dem Endabschnitt 8 des Milchtanks 1, z.B. über die Antriebswelle 20 und die Antriebseinheit 19, festgelegt.

Der Führungszapfen 10 kann endständig konisch, insbesondere zum Boden 29 der Ausnehmung 24 hin spitz zulaufend, ausgebildet sein. Der Führungszapfen ist dabei, vorzugsweise lösbar, über mechanische Verbindungsmittel mit dem Boden 7 des Milchtanks 1 verbunden, insbesondere verschraubt, besonders bevorzugt wasserdicht verschraubt.

Der Gegenstand der Erfindung ist nicht auf das dargestellte Ausführungsbeispiel beschränkt. So ist es beispielsweise auch möglich im Rahmen der mechanischen Umkehr die Ausnehmung 24 am Boden 7 des Milchtanks1 und den Führungszapfen 10 endständig am Rührstab 16 anzuordnen.

Dadurch wird, anders als beim Zusammenwirken zweier Zylinderflächen zwischen einem Führungszapfen und einer Ausnehmung, bei Verwendung einer torus- oder doppelkonischen Form des Lagerkopfes 11 ein Verkanten der Flächen bei Vibrationen, oder bei Fehlausrichtung des Rührstabs 16, z.B. durch geringfügig-versetzte Montage der Antriebseinheit 19 oder des Führungszapfens 10, verhindert.

Zugleich ist insbesondere eine doppelkonische Form eines Lagerzapfens 10 im Vergleich zu einer Kugelform einfacher fertigbar. Im Zusammenspiel mit dem gelenkgelagerten Rührstab 16, welcher über das Gelenk 21 mit der Antriebswelle 20 verbunden ist, kann die Rührvorrichtung Bewegungen des Rührstabs ausgleichen, welcher insbesondere in der vertikalen Variante eines Milchtanks aufgrund der großen Länge des Rührstabes vorkommen kann.

Der Führungszapfen 10 oder Ausnehmung 24 können parallel oder schräg zur Längsachse B angeordnete Unterbrechungen 28, z.B. Rillen, aufweisen, um einen besseren Abfluss von Milch, oder im Reinigungsfall von Wasser, welches in den Raum zwischen dem Führungszapfen 10 und der Ausnehmung 24 gelangt, zu ermöglichen.

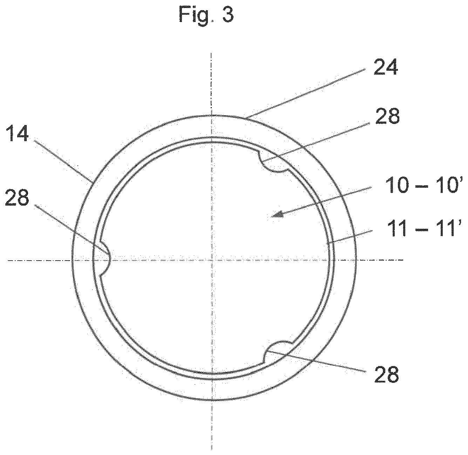

Die in Fig. 1-4 dargestellte und beschriebene Variante eines erfindungsgemäßen Milchtanks ermöglicht die Homogenisierung der Milch und der Temperatur innerhalb eines vertikalen Tanks. Ein solcher Tank kann beispielsweise mehr als 7 Meter hoch sein, bei entsprechender Dimensionierung der Rührvorrichtung. Die Lagerung des Rührstabantriebs im oberen Bereich des Tanks ermöglicht dabei eine verminderte Gewichtsbelastung und Reibung auf die bodennahen Führungsmittel, welche in Fig. 1-4 jeweils der Führungszapfen 10, 10', 10" und die Ausnehmung 24 sind.

### Bezugszeichenliste

- 1: Milchtank
- 2: Hohlraum zur Aufnahme und Kühlung von Milch
- 3: Tankwand
- 5: Zylindermantelfläche
- 6: Untergrund
- 7: geneigter Boden des Milchtanks
- 8: oberer Endabschnitt
- 10, 10',: Führungszapfen
- 11, 11': Lagerkopf
- 12, 13: konische Flächen
- 14: radiale Kontaktfläche
- 15: Rührvorrichtung
- 16: Rührstab
- 17, 18: Rührblätter
- 19: Antriebseinheit
- 20: Antriebswelle
- 21: mechanisches Gelenk
- 22: oberes Ende des Rührstabs
- 23: unteres Ende des Rührstabs
- 24: zylindrische Ausnehmung außenseitig vom Lagerkopf
- 28: Unterbrechungen
- 29: Boden der Ausnehmung außenseitig vom Lagerkopf
- 30: Schraubkanal

- A: Längsachse
- B: Längsachse

## Patentansprüche

1. Milchtank (1) mit einem Hohlraum (2) zur Lagerung und/oder Kühlung von Milch, wobei der Tank (1) eine Rührvorrichtung (15) mit einem Rührstab (16) aufweist, welcher in dem Hohlraum (2) angeordnet ist,
wobei der Rührstab (16) ein erstes Führungsmittel aufweist und wobei der Boden (7) des Milchtanks (1) ein zweites Führungsmittel aufweist, welche miteinander wechselwirken,
wobei zumindest eines der vorgenannten Führungsmittel eine Ausnehmung (24 ist und eines der vorgenannten Führungsmittel ein Führungszapfen (10, 10', 10") ist, welcher bereichsweise in die Ausnehmung (24) hineinragt,
wobei der Führungszapfen (10, 10', 10") einen Lagerkopf (11, 11', 11") aufweist, mit einer Kontaktfläche (14) mit der Ausnehmung, (24) **dadurch gekennzeichnet, dass**
der Lagerkopf (11, 11', 11") des Führungszapfens (10, 10', 10") einen Torus und/oder einen Doppelkonus mit zwei aufeinander zulaufende, konisch-auslaufende Flächen (12, 13) aufweist, und wobei die Kontaktfläche (14) dem Torus, oder dem Kreuzungsbereich der beiden Flächen (12, 13) zugeordnet ist.

2. Milchtank nach Anspruch 1, **dadurch gekennzeichnet, dass** die Ausnehmung (24) als zylindrische Ausnehmung ausgebildet ist

3. Milchtank nach Anspruch 1 oder 2, **dadurch gekennzeichnet, dass** der Führungszapfen (10, 10') mit dem Boden (7) des Milchtanks (1) lösbar und/oder fest verbunden ist.

4. Milchtank nach einem der vorhergehenden Ansprüche, **dadurch gekennzeichnet, dass** ein Spiel zwischen dem Führungszapfen (10, 10') und der zylindrischen Ausnehmung (24) vorliegt

5. Milchtank nach einem der vorhergehenden Ansprüche, **dadurch gekennzeichnet, dass** der Minimalabstand zwischen dem Führungszapfen (10, 10') und der Ausnehmung (24) bei zentrischer Positionierung des Führungszapfens (10, 10') in der Ausnehmung (24) zumindest 0,1 mm, vorzugsweise zwischen 0,2 bis 1,8 mm, beträgt.

6. Milchtank nach einem der vorhergehenden Ansprüche, **dadurch gekennzeichnet, dass** parallel oder schräg zur Längsachse (B) des Führungszapfens (10') Unterbrechungen (28) der Kontaktfläche (14) des Führungszapfens (10'), vorzugsweise Rillen, vorgesehen sind, insbesondere zur Vermeidung von Ansammlungen und Butterung von Milch und zur Erleichterung der Reinigung.

7. Milchtank nach einem der vorhergehenden Ansprüche, **dadurch gekennzeichnet, dass** der Führungszapfen (10, 10') ausgehend von der Kontaktfläche (14) eine konische Fläche (12) aufweist, welche zum Boden (29) der Ausnehmung (24) hin, insbesondere spitz, zuläuft um ein Ansammeln von Milch zu vermeiden.

8. Milchtank nach einem der vorhergehenden Ansprüche, **dadurch gekennzeichnet, dass** der Führungszapfen (10, 10') über mechanische Verbindungsmittel, vorzugsweise über ein einziges Verbindungsmittel, besonders bevorzugt durch Verschraubung, festgelegt ist und vorzugsweise durch eine Dichtung geschützt ist um ein Ansammeln von Milch zu vermeiden.

9. Milchkühltank (1) mit einem Hohlraum (2) zur Lagerung und Kühlung von Milch, wobei der Milchkühltank (1) eine Rührvorrichtung (15) mit einem Rührstab (16) aufweist, welcher in dem Hohlraum (2) angeordnet ist, wobei die Rührvorrichtung (15) eine Antriebseinheit (19) mit einer Antriebswelle (20) aufweist, welche über ein mechanisches Gelenk (21) mit dem Rührstab (16) verbunden ist.

10. Milchkühltank nach Anspruch 9, **dadurch gekennzeichnet, dass** die Rührvorrichtung (15) eine Antriebseinheit (19) aufweist, welche den Rührstab (16) in Rotation versetzt und welche an der Außenseite des Milchtanks (1) festgelegt ist.

11. Milchkühltank nach Anspruch 9 oder 10, **dadurch gekennzeichnet, dass** das mechanische Gelenk (21) als Kardan-Gelenk oder als Kugelkopf-Gelenk ausgebildet ist.

12. Milchkühltank nach Anspruch 9 oder 10, **dadurch gekennzeichnet, dass** das mechanische Gelenk (21) als elastische Kupplung ausgebildet ist.

13. Milchkühltank nach einem der vorhergehenden Ansprüche, **dadurch gekennzeichnet, dass** der Rührstab (16) im Milchtank (1) über das mechanische Gelenk (21) hängend an einem ersten Ende (22) aufgehängt ist, wobei der Rührstab (16) über die Führungsmittel an einem zweiten Ende (23) geführt ist.

14. Milchkühltank nach einem der vorhergehenden Ansprüche, **dadurch gekennzeichnet, dass** der Milchtank (1) als vertikaler Milchtank ausgebildet ist.

15. Milchtank nach einem der vorhergehenden Ansprüche, **dadurch gekennzeichnet, dass** der Milchkühltank (1) eine Längsachse (A) aufweist, wobei der Rührstab (16) parallel zur Längsachse (A) angeordnet ist.

16. Milchkühltank nach einem der vorhergehenden Ansprüche, **dadurch gekennzeichnet, dass** der Rührstab (16) eine Länge von mehr als 2 Metern aufweist.

17. Milchkühltank nach einem der vorhergehenden Ansprüche, **dadurch gekennzeichnet, dass** die Bodenfläche (7) des Milchtanks (1), an welcher der Führungszapfen (10, 10') angeordnet ist, gegenüber der Längsachse (A) des Milchtanks (1) schräg verläuft.

## Claims

1. Milk tank (1) with a cavity (2) for storing and/or cooling milk, wherein the tank (1) has a stirring device (15) with a stirring rod (16) which is arranged in the cavity (2),
wherein the stirring rod (16) has a first guide means and wherein the base (7) of the milk tank (1) has a second guide means, which interact with one another, wherein at least one of the aforementioned guide means is a recess (24) and one of the aforementioned guide means is a guide pin (10, 10', 10"), which projects into the recess (24) in some sections,
wherein the guide pin (10, 10', 10") has a bearing head (11, 11', 11"), with a contact surface (14) with the recess (24),
**characterized in that**
the bearing head (11, 11', 11") of the guide pin (10, 10', 10") has a torus and/or a double cone with two conically tapering surfaces (12, 13) running towards one another, and wherein the contact surface (14) is associated with the torus, or the intersection area of the two surfaces (12, 13).

2. Milk tank according to claim 1, **characterized in that** the recess (24) is configured as a cylindrical recess.

3. Milk tank according to claim 1 or 2, **characterized in that** the guide pin (10, 10') is connected detachably and/or securely to the base (7) of the milk tank (1).

4. Milk tank according to any one of the preceding claims, **characterized in that** there is a clearance between the guide pin (10, 10') and the cylindrical recess (24).

5. Milk tank according to any one of the preceding claims, **characterized in that** the minimum distance between the guide pin (10, 10') and the recess (24) is at least 0.1 mm, preferably between 0.2 to 1.8 mm, when the guide pin (10, 10') is positioned centrally in the recess (24).

6. Milk tank according to any one of the preceding claims, **characterized in that** interruptions (28) of the contact surface (14) of the guide pin (10'), preferably grooves, are provided parallel or obliquely to the longitudinal axis (B) of the guide pin (10'), in particular to avoid accumulations and the churning of milk and to facilitate cleaning.

7. Milk tank according to any one of the preceding claims, **characterized in that** the guide pin (10, 10') has a conical surface (12) starting from the contact surface (14) which tapers towards the base (29) of the recess (24), in particular to a point, in order to avoid an accumulation of milk.

8. Milk tank according to any one of the preceding claims, **characterized in that** the guide pin (10, 10') is fixed by mechanical connecting means, preferably via a single connecting means, particularly preferably by screws, and is preferably protected by a seal in order to prevent milk from collecting.

9. Milk cooling tank (1) with a cavity (2) for storing and/or cooling milk, wherein the milk cooling tank (1) has a stirring device (15) with a stirring rod (16), which is arranged in the cavity (2),
wherein the stirring device (15) has a drive unit (19) with a drive shaft (20) which is connected to the stirring rod (16) via a mechanical joint (21).

10. Milk cooling tank according to claim 9, **characterized in that** the stirring device (15) has a drive unit (19) which sets the stirring rod (16) into rotation and which is secured to the outside of the milk tank (1).

11. Milk cooling tank according to claim 9 or 10, **characterized in that** the mechanical joint (21) is configured as a cardan joint or as a ball-and-socket joint.

12. Milk cooling tank according to claim 9 or 10, **characterized in that** the mechanical joint (21) is configured as an elastic coupling.

13. Milk cooling tank according to any one of the preceding claims, **characterized in that** the stirring rod (16) is suspended in the milk tank (1) via the mechanical joint (21) suspended at a first end (22), wherein the stirring rod (16) is guided via the guide means at a second end (23).

14. Milk cooling tank according to any one of the preceding claims, **characterized in that** the milk tank (1) is configured as a vertical milk tank.

15. Milk tank according to any one of the preceding claims, **characterized in that** the milk cooling tank (1) has a longitudinal axis (A), the stirring rod (16) being arranged parallel to the longitudinal axis (A).

16. Milk tank according to any one of the preceding claims, **characterized in that** the stirring rod (16) has a length of more than 2 metres.

17. Milk tank according to any one of the preceding claims, **characterized in that** the base surface (7) of the milk tank (1), on which the guide pin (10, 10') is arranged, extends obliquely with respect to the longitudinal axis (A) of the milk tank (1).

## Revendications

1. Réservoir à lait (1) avec une cavité (2) pour le logement et/ou le refroidissement de lait, dans lequel le réservoir (1) présente un dispositif d'agitation (15) avec une tige d'agitation (16) qui est agencée dans la cavité (2),
dans lequel la tige d'agitation (16) présente un premier moyen de guidage et dans lequel le fond (7) du réservoir à lait (1) présente un second moyen de guidage, lesquels interagissent entre eux,
dans lequel au moins un des moyens de guidage précités est un évidement (24) et un des moyens de guidage précités est un tourillon de guidage (10, 10', 10'') qui pénètre par endroits dans l'évidement (24),
dans lequel le tourillon de guidage (10, 10', 10'') présente une tête de palier (11, 11', 11'') avec une surface de contact (14) avec l'évidement (24),
**caractérisé en ce que**
la tête de palier (11, 11', 11'') du tourillon de guidage (10, 10', 10'') présente un tore et/ou un double cône avec deux surfaces (12, 13) se terminant en cône, convergeant l'une vers l'autre, et dans lequel la surface de contact (14) est associée au tore ou à la zone de croisement des deux surfaces (12, 13).

2. Réservoir à lait selon la revendication 1, **caractérisé en ce que** l'évidement (24) est réalisé comme évidement cylindrique.

3. Réservoir à lait selon la revendication 1 ou 2, **caractérisé en ce que** le tourillon de guidage (10, 10') est relié de manière amovible et/ou fixe au fond (7) du réservoir à lait (1).

4. Réservoir à lait selon l'une quelconque des revendications précédentes, **caractérisé en ce qu'**il existe un jeu entre le tourillon guidage (10, 10') et l'évidement (24) cylindrique.

5. Réservoir à lait selon l'une quelconque des revendications précédentes, **caractérisé en ce que** la distance minimale entre le tourillon de guidage (10, 10') et l'évidement (24), lors du positionnement central du tenon de guidage (10, 10') dans l'évidement (24), est d'au moins 0,1 mm, de préférence entre 0,2 et 1,8 mm.

6. Réservoir à lait selon l'une quelconque des revendications précédentes, **caractérisé en ce que** des interruptions (28) de la surface de contact (14) du tourillon de guidage (10'), de préférence des rainures, sont prévues parallèlement ou en biais par rapport à l'axe longitudinal (B) du tourillon de guidage (10'), en particulier pour éviter des accumulations et le barattage de lait et pour faciliter le nettoyage.

7. Réservoir à lait selon l'une quelconque des revendications précédentes, **caractérisé en ce que** le tourillon de guidage (10, 10') présente à partir de la surface de contact (14) une surface conique (12) qui se termine vers le fond (29) de l'évidement (24), en particulier en pointe, afin d'éviter une accumulation de lait.

8. Réservoir à lait selon l'une quelconque des revendications précédentes, **caractérisé en ce que** le tourillon de guidage (10, 10') est fixé par le biais de moyens de liaison mécaniques, de préférence par le biais d'un seul moyen de liaison, de manière particulièrement préférée par vissage, et est de préférence protégé par une garniture d'étanchéité afin d'éviter une accumulation de lait.

9. Réservoir réfrigéré à lait (1) avec une cavité (2) pour le logement et le refroidissement de lait, dans lequel le réservoir réfrigéré à lait (1) présente un dispositif d'agitation (15) avec une tige d'agitation (16) qui est agencée dans la cavité (2), dans lequel le dispositif d'agitation (15) présente une unité d'entraînement (19) avec un arbre d'entraînement (20) qui est relié par le biais d'une articulation mécanique (21) à la tige d'agitation (16).

10. Réservoir réfrigéré à lait selon la revendication 9, **caractérisé en ce que** le dispositif d'agitation (15) présente une unité d'entraînement (19) qui amène en rotation la tige d'agitation (16) et qui est fixée au côté extérieur du réservoir à lait (1).

11. Réservoir réfrigéré à lait selon la revendication 9 ou 10, **caractérisé en ce que** l'articulation mécanique (21) est réalisée comme articulation à Cardan ou comme articulation à tête sphérique.

12. Réservoir réfrigéré à lait selon la revendication 9 ou 10, **caractérisé en ce que** l'articulation mécanique (21) est réalisée comme couplage élastique.

13. Réservoir réfrigéré à lait selon l'une quelconque des revendications précédentes, **caractérisé en ce que** la tige d'agitation (16) est suspendue dans le réservoir à lait (1) par le biais de l'articulation mécanique (21) suspendue à une première extrémité (22), dans lequel la tige d'agitation (16) est guidée par le biais des moyens de guidage à une seconde extrémité (23).

14. Réservoir réfrigéré à lait selon l'une quelconque des revendications précédentes, **caractérisé en ce que** le réservoir à lait (1) est réalisé comme réservoir à lait vertical.

15. Réservoir à lait selon l'une quelconque des revendications précédentes, **caractérisé en ce que** le réservoir réfrigéré à lait (1) présente un axe longitudinal (A), dans lequel la tige d'agitation (16) est agencée parallèlement à l'axe longitudinal (A).

16. Réservoir réfrigéré à lait selon l'une quelconque des revendications précédentes, **caractérisé en ce que** la tige d'agitation (16) présente une longueur de plus de 2 mètres.

17. Réservoir réfrigéré à lait selon l'une quelconque des revendications précédentes, **caractérisé en ce que** la surface de fond (7) du réservoir à lait (1), au niveau de laquelle le tourillon de guidage (10, 10') est agencé, s'étend en biais par rapport à l'axe longitudinal (A) du réservoir à lait (1).
